Europäisches Patentamt

European Patent Office

Office européen des brevets

(19)

(11) Veröffentlichungsnummer: **0 014 945**
**B1**

(12) # EUROPÄISCHE PATENTSCHRIFT

(45) Veröffentlichungstag der Patentschrift:
25.05.83

(51) Int. Cl.³: **H 04 J 3/06, H 04 Q 11/04**

(21) Anmeldenummer: 80100711.3

(22) Anmeldetag: 12.02.80

(54) Schaltungsanordnung zur Takterzeugung in Fernmeldeanlagen, insbesondere Zeitmultiplex-Digital-Vermittlungsanlagen.

(30) Priorität: 27.02.79 DE 2907608

(43) Veröffentlichungstag der Anmeldung:
03.09.80 Patentblatt 80/18

(45) Bekanntmachung des Hinweises auf die Patenterteilung:
25.05.83 Patentblatt 83/21

(84) Benannte Vertragsstaaten:
AT CH DE FR GB IT NL SE

(56) Entgegenhaltungen:
DE-B-2 636 150
GB-A-1 350 150
GB-A-1 444 067
LU-A-80 132
US-A-3 522 455
US-A-3 974 333
HAZELTINE LABORATORIES STAFF, »Principles of Color Television«, 1956 Wiley, Seiten 180—190, New York, U.S.A.
ELEKTRONIK, Band 22, Nr. 8, August 1973, Seiten 285—287, München, DE. GROSSKOPF: »Rechteckgenerator mit digital einstellbarer Frequenz«

(73) Patentinhaber: SIEMENS AKTIENGESELLSCHAFT,
Berlin und München Wittelsbacherplatz 2,
D-8000 München 2 (DE)

(72) Erfinder: Zeiträg, Rolf, Dipl.-Phys., Dompfaffweg 3,
D-8000 München 82 (DE)

## 0 014 945

Schaltungsanordnung zur Takterzeugung in Fernmeldeanlagen, insbesondere
Zeitmultiplex-Digital-Vermittlungsanlagen

Die Versorgung von Fernmeldeanlagen, insbesondere Zeitmultiplex-Digital-Vermittlungsanlagen, und der von solchen Fernmeldeanlagen ausgehenden Leitungen mit einem dabei auch von außen vorzugsweise im Servo-Synchron-Verfahren in der Taktfrequenz bestimmten Amtstakt bringt u. a. Probleme der Genauigkeit und Ausfallsicherheit einer solchen Taktversorgung mit sich.

In diesem Zusammenhang ist es aus der DE-AS 2 636 150 bekannt, zur phasengenauen Synchronisation von Grundgeneratoren in trägerfrequenten Nachrichtenübertragungssystemen auf eine in Weitverkehrsnetzen übertragene Normalfrequenz mittels digitaler phasengenauer Frequenznachstellung zur Grobeinstellung und analoger Frequenznachstellung zur Feinstellung in der Weise zu verfahren, daß zur Grobeinstellung eine digitale Phasenregelschleife gebildet wird, die pro Schwebungsperiode zwischen Normalfrequenz und Referenzfrequenz des mitzuziehenden Oszillators nur einen digitalen Stellschritt zur Frequenzkorrektur abgibt und daß zusätzlich eine analoge Phasenregelschleife vorgesehen ist, deren Ziehbereich etwa dem doppelten Regelschritt des digitalen Regelkreises entspricht, und daß die Mitte des analogen Regelbereiches in der Mitte zwischen den beiden, einer Schwebungsperiode zugehörigen Ansprechpunkten des digitalen Regelkreises liegt und daß bei Überschreiten des analogen Regelbereichs ein weiterer Regelschritt durch den digitalen Regelkreis ausgelöst wird, der ein Zurückkehren der Phase der Referenzfrequenz des mitzuziehenden Oszillators etwa in die Mitte des Stellbereichs der analogen Phasenregelung bewirkt, und daß die so gebildete Regelgröße gespeichert wird.

Bei einer solchen Frequenznachsteuerung bleibt die gespeicherte Regelgröße bei einem Ausfall der Normalfrequenz erhalten (siehe auch tekade techn. mitt. (1978), S. 24 — 28), so daß Unterbrechungen in der Normalfrequenzübertragung keinen Einfluß auf die Kurzzeitfrequenzstabilität des Oszillators haben; bei einem Ausfall der Frequenz-Nachsteuereinrichtung allerdings ist die Frequenzstabilität nicht mehr gesichert.

Aus der US-A-3 974 333 ist es bekannt, einen Aktiv-Takt und einen Standby-Takt durch einen einzigen Submultiple-Reference-Takt zu synchronisieren, wozu aus dem Aktiv-Takt ein erstes Synchronisierungssignal und aus dem Standby-Takt ein zweites Synchronisierungssignal jeweils gleicher Taktfrequenz abgeleitet wird, wobei die Pulsbreite der Synchronisierungssignale diejenige des Reference-Signals der vorgegebenen Phasentoleranz entsprechend übersteigt; zur Synchronisierung von Aktiv-Takt und Standby-Takt werden diese so phasenverschoben, daß die Impulse des Reference-Signals vollständig im Zeitbereich der Synchronisierungssignalimpulse zu liegen kommen.

Ferner ist es aus der LU-A-80 132 (BE-PS-869 889) für eine Zeitmultiplex-Digital-Vermittlungsanlage mit doppelt vorgesehenen, bei störungsfreiem Betrieb parallel zueinander arbeitenden und jeweils etwa die Hälfte des Verkehrs übernehmenden Koppelfeldeinrichtungen bereits bekannt, daß eine die Vermittlungsanlage und die von ihr ausgehenden Leitungen mit einem vorzugsweise im Autosynchronverfahren und/oder im Servosynchronverfahren in der Bitfrequenz bestimmten Amtstakt versorgende Amtstakterzeugungsanordnung ebenfalls doppelt vorgesehen ist, wobei die jeweils eine der beiden Amtstakterzeugungsanordnungen die jeweils eine von solchen doppelt vorgesehenen Koppelfeldeinrichtungen sowie die von der Vermittlungsanlage ausgehenden Leitungen mit einem von ihr unabhängig von der jeweils anderen Amtstakterzeugungsanordnung erzeugten Amtstakt taktversorgt und die jeweils andere der beiden Amtstakterzeugungsanordnungen die jeweils andere von solchen doppelt vorgesehenen Koppelfeldeinrichtungen mit einem mit dem von der jeweils einen Amtstakterzeugungsanordnung gelieferten Amtstakt phasengleich synchronisierten Amtstakt taktversorgt. Dabei sind die in den beiden Amtstakterzeugungsanordnungen erzeugten Amtstakte praktisch phasengleich, so daß bei der ausgangsseitigen Zusammenführung der über die beiden Koppelfeldhälften vermittelten Bitströme allenfalls vernachlässigbar kleine Phasendifferenzen zwischen beiden Bitströmen auftreten und es bei einem wechselseitigen Umschalten der Amtstakterzeugungsanordnungen, aufgrund dessen eine bisher führend arbeitende Amtstakterzeugungsanordnung nunmehr geführt arbeitet (und umgekehrt), allenfalls zu einem erzeugten Phasensprung kommt, der den Synchronismus von in die von der Vermittlungsanlage ausgehenden Leitungen eingefügten Streckenregeneratoren unbeeinträchtigt läßt. Zugleich wird die Möglichkeit eröffnet, im Störungsfall oder bei wartungsbedingten Eingriffen unter Vermeidung unzulässiger Phasensprünge beide Koppelfeldhälften nach einer entsprechenden Ersatzschaltung auch von einer einzigen Amtstakterzeugungsanordnung her taktzuversorgen, wozu in Weiterbildung der Erfindung den einzelnen Hälften der Koppelfeldeinrichtungspaare die Amtstakte beider Amtstakterzeugungsanordnungen an einer entsprechenden Umschalteinrichtung zugeführt werden können.

Bei dieser bekannten Schaltungsanordnung wird bei Servosynchronisierung der Mastertakt nur jeweils einem der beiden Amtstakterzeuger zugeführt. Will man aus Gründen der Ausfallsicherheit die Schaltungsredundanz erhöhen und bei doppelt vorgesehenen Amtstakterzeugungsanordnungen beide Amtstakterzeuger aus unterschiedlichen Mastertakt-Quellen im Servosynchronverfahren frequenzsynchronisieren, so stellt sich die Aufgabe, Abweichungen von der angestrebten Phasengleichheit der beiden Amtstakte auf einen maximal zugelassenen Wert auch dann zu begrenzen, wenn die den beiden Amtstakterzeugern zugeführten Mastertakte (an sich gleicher Taktfrequenz) sich in ihrer Phasenlage um bis zu 2 $\pi$ unterscheiden können.

Diese Aufgabe wird in einer Schaltungsanordnung zur Takterzeugung in Fernmeldeanlagen, insbesondere Zeitmultiplex-Digital-Vermittlungsanlagen, mit einer die Fernmeldeanlage und die von ihr ausgehenden Leitungen mit einem vorzugsweise im Servosynchronverfahren in der Taktfrequenz bestimmten Amtstakt versorgenden, doppelt vorgesehenen Amtstakterzeugungsanordnung, wobei der jeweils eine der beiden Amtstakterzeuger einen von ihm unabhängig von dem jeweils anderen Amtstakterzeuger erzeugten Amtstakt liefert und der jeweils andere (geführte) Amtstakterzeuger einen mit dem von dem jeweils einen (führenden) Amtstakterzeuger gelieferten Amtstakt zumindest angenähert phasengleich synchronisierten Amtstakt liefert, erfindungsgemäß dadurch gelöst, daß jeder der beiden Amtstakterzeuger durch einen ihm zugeführten Mastertakt servosynchronisiert einen Zwischentakt mit einer Taktperiode erzeugt, die höchstens gleich der maximal zugelassenen Taktversetzungs(zeitspanne) zwischen den von den beiden Amtstakterzeugern gelieferten Amtstakten ist, daß dieser Zwischentakt einem Frequenzuntersetzer zur Gewinnung des Amtstaktes zugeführt wird, und daß der Amtstakt des jeweils geführten Amtstakterzeugers verglichen wird und bei Feststellung einer einen Grenzwert in der Größenordnung einer Zwischentaktperiode überschreitenden Taktversetzung eine Halbperiode des geführten Amtstaktes um die Länge einer Zwischentaktperiode bei nacheilendem geführtem Amtstakt verkürzt und bei voreilendem geführtem Amtstakt verlängert wird.

Die Erfindung bringt den Vorteil mit sich, daß die Taktversetzung zwischen den von den beiden Amtstakterzeugern gelieferten Amtstakten einen sich in der Größenordnung der Zwischentaktperiode haltenden Betrag nicht überschreitet, so daß durch entsprechende Vorgabe der Zwischentaktfrequenz die Taktversetzung zwischen den beiden Amtstakten in den jeweils gewünschten Grenzen gehalten werden kann. Zugleich ist mit der Erfindung aber auch der Vorteil verbunden, daß nicht schon bei beliebig kleiner Taktversetzung ein Nachziehen des jeweils geführten Amtstakterzeugers bewirkt wird, vielmehr die Phasensynchronisierung mit einer Hysterese behaftet ist, aufgrund derer ein Jitter des führenden Amtstaktes unbeachtlich bleibt.

Zweckmäßigerweise werden den beiden Amtstakterzeugern die Mastertakte jeweils von einer von einem Normaltakt beaufschlagten, die jeweilige Regelgröße zugleich speichernden Frequenznachsteuereinrichtung her zugeführt; eine solche Weiterbildung der Erfindung hat den Vorteil einer entsprechend hohen Redundanz in der Servosynchronisierung mit einem frequenzstabilen Mastertakt und damit einer entsprechend hohen Sicherheit und Genauigkeit der eigentlichen Amtstakterzeugung.

In weiterer Ausgestaltung der Erfindung ist zweckmäßigerweise dem vom Mastertakt servosynchronisierten Zwischentaktgenerator des jeweils geführten Amtstakterzeugers eine digitale Taktuntersetzungs- und Phasensynchronisierungsschaltung nachgeschaltet, die mit einem Vergleichseingang an den Ausgang des jeweils führenden Amtstakterzeugers angeschlossen ist und an deren Ausgang der Amtstakt des geführten Amtstakterzeugers auftritt; dies gestattet eine Phasensynchronisierung zwischen geführtem und führendem Amtstakt ohne einen Eingriff in den eigentlichen Zwischentaktgenerator des jeweils geführten Amtstakterzeugers.

Zweckmäßigerweise kann die Erfindung eine weitere Ausgestaltung dahingehend erfahren, daß die digitale Taktuntersetzungs- und Phasensynchronisierungsschaltung eine Zwischentakt-Frequenzhalbierungsstufe aufweist, der über einen bei jeder Feststellung einer den jeweiligen Grenzwert überschreitenden Taktversetzung betätigten Phasenumtaster ein dabei um einen zusätzlichen Untersetzungsschritt lediglich bei nacheilendem geführtem Amtstakt weitergeschalteter weiterer Frequenzuntersetzer nachgeschaltet ist, mit dessen der Amtstaktfrequenz entsprechendem Ausgang der Amtstaktausgang des Amtstakterzeugers verbunden ist. Hierzu können in weiterer Ausgestaltung der Erfindung mit dem Frequenzuntersetzer über zwei Amtstakt-Zeitfensterschaltungen zwei an ihrem jeweils zweiten Eingang mit dem Amtstakt des jeweils führenden Amtstakterzeugers beaufschlagte Verknüpfungsglieder verbunden sein, die über ihnen nachgeschaltete bistabile Kippglieder und eine ODER-Schaltung zu einem dem Frequenzuntersetzer steuernden Einstellglied führen, an dessen Ausgang außerdem ein Stellglied für den Phasenumtaster angeschlossen ist.

Das Einstellglied weist dabei in weiterer zweckmäßiger Ausgestaltung der Erfindung einen Sperreingang für ein Umschaltsignal zum Umschalten eines bisher geführten Amtstakterzeugers in einen führenden Amtstakterzeuger auf.

Anhand der Zeichnungen wird die Erfindung noch näher erläutert. Dabei zeigt

Fig. 1 schematisch ein Ausführungsbeispiel einer Schaltungsanordnung zur Takterzeugung gemäß der Erfindung;

Fig. 2 zeigt ebenfalls in Form eines Ausführungsbeispiels schaltungstechnische Einzelheiten einer in einer Schaltungsanordnung nach Fig. 1 enthaltenen Taktuntersetzungs- und Phasensynchronisierungsschaltung;

Fig. 3 und 4 schließlich verdeutlichen durch entsprechende Schaltzustandsdiagramme die Wirkungsweise der Schaltungsanordnung nach Fig. 2.

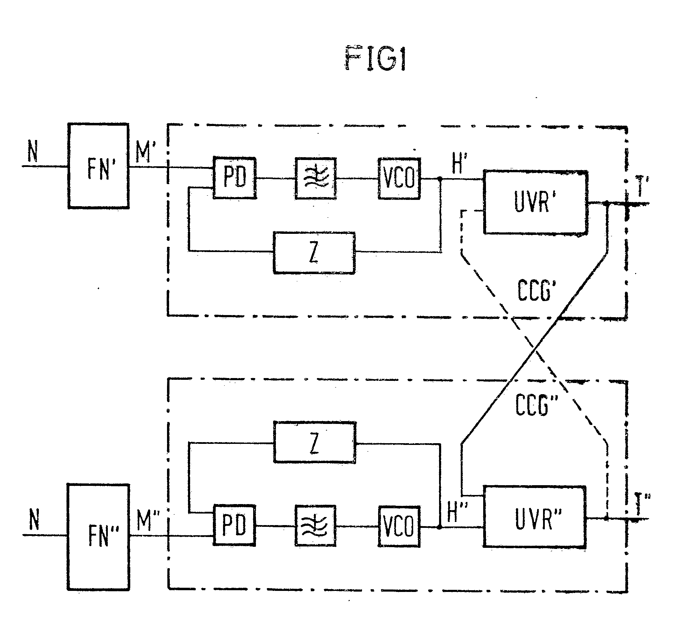

Die Zeichnung Fig. 1 zeigt schematisch ein Ausführungsbeispiel einer Schaltungsanordnung zur Takterzeugung mit einer doppelt vorgesehenen Amtstakterzeugeranordnung CCG', CCG'' gemäß der Erfindung. Der eine der beiden Amtstakterzeuger, beispielsweise der Amtstakterzeuger CCG', möge an seinem Taktausgang T' einen von ihm unabhängig von dem anderen Amtstakterzeuger CCG''

3

erzeugten Amtstakt mit einer Taktfrequenz von beispielsweise 2,048 MHz liefern; der Amtstakterzeuger CCG″ möge einen mit dem von dem Amtstakterzeuger CCG′ gelieferten Amtstakt zumindest angenähert phasengleich synchronisierten Amtstakt gleicher Frequenz liefern. Hierbei werden die beiden Amtstakterzeuger CCG′ und CCG″ jeweils durch einen Mastertakt M′ bzw. M″ mit einer Taktfrequenz von beispielsweise 2,048 MHz in der Taktfrequenz servosynchronisiert, der dem betreffenden Amtstakterzeuger CCG′ bzw. CCG″ von einer von einem Normaltakt von beispielsweise ebenfalls 2,048 MHz beaufschlagten Frequenznachsteuereinrichtung FN′ bzw. FN″ her zugeführt wird. Solche Frequenznachsteuereinrichtungen, die im wesentlichen einen PLL-Oszillator und einen Speicher für die jeweilige Regelgröße aufweisen, in welchem die jeweils gespeicherte Regelgröße bei einem Ausfall des Normaltakts erhalten bleibt, sind grundsätzlich (z. B. aus der DE-AS 2 636 150) bekannt, weshalb sich hier weitere Erläuterungen dazu erübrigen; genügt hier zu erwähnen, daß solche Frequenznachsteuerungseinrichtungen eine geforderte Frequenztoleranz der Tastertakte M′, M″ von $10^{-9}$/d zu gewährleisten vermögen.

Es sei hier bemerkt, daß der Normaltakt N seinerseits direkt von einem zentralen Normaltaktgenerator herrühren kann, an den eine Vielzahl gleicher oder ähnlicher Schaltungsanordnungen parallel angeschlossen sind; der Normaltakt N kann aber von einem zentralen Normaltaktgenerator her auch über eine Kettenschaltung von jeweils masterslave-betriebenen Taktgeneratoren bzw. Frequenznachsteuerschaltungen abgeleitet sein.

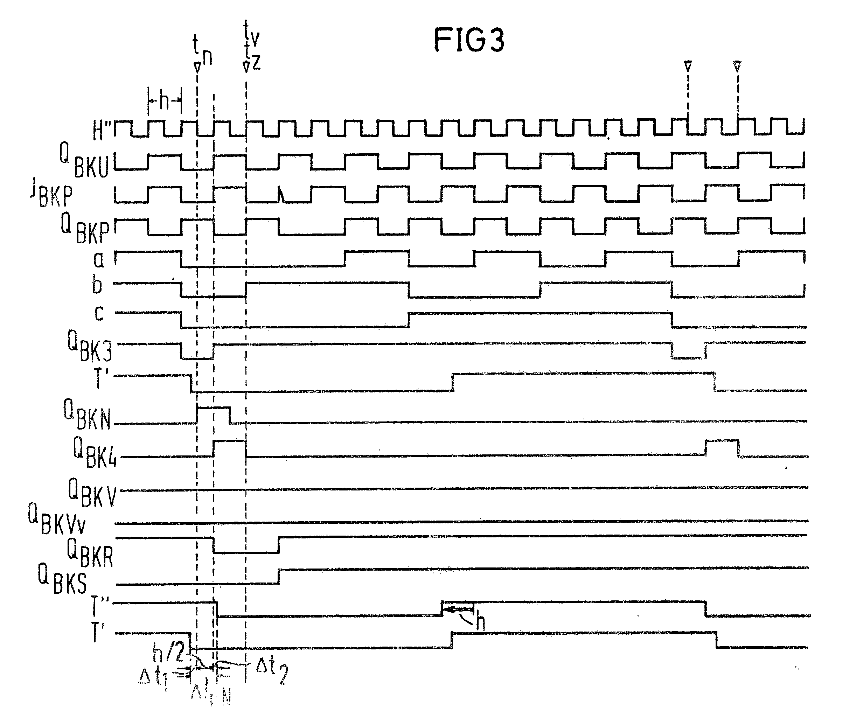

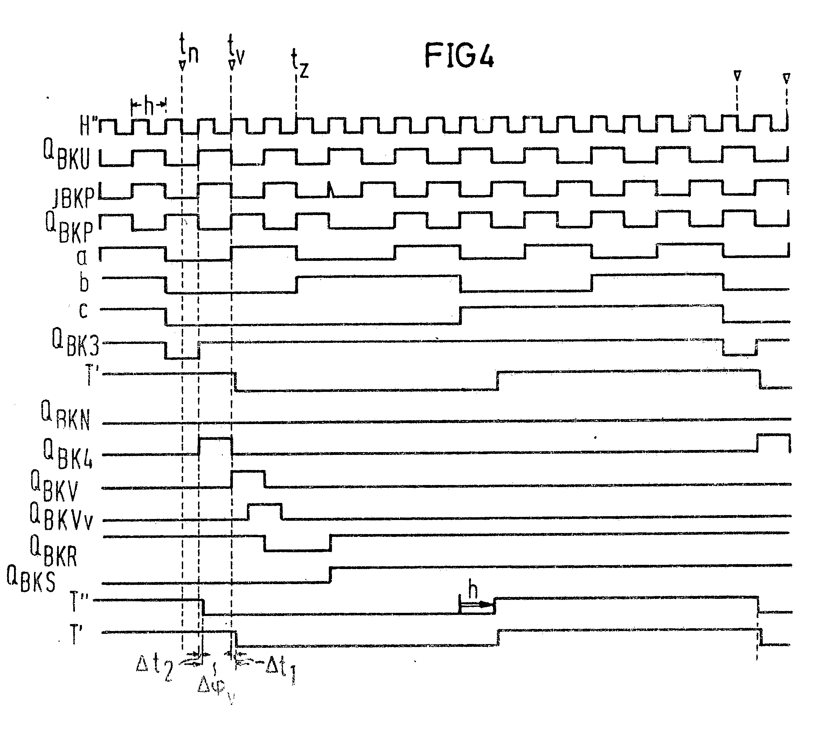

Die beiden Mastertakte M′ und M″ können sich in ihrer Phasenlage um bis zu $2\pi$ (entsprechend 488 ns bei einer Mastertaktfrequenz von 2,048 MHz) unterscheiden. Damit sich dennoch eine Taktversetzungs(zeitspanne) zwischen den beiden Amtstakten T′ und T″ in den gewünschten Grenzen von beispielsweise 35 ns hält, erzeugen nun sowohl der führende Amtstakterzeuger CCG′ als auch der von ihm geführte Amtstakterzeuger CCG″, durch den jeweils zugeführten Mastertakt M′ bzw. M″ servosynchronisiert, einen Zwischentakt H′ bzw. H″ mit einer Taktperiode h (in Fig. 3 und 4) von beispielsweise 30,52 ns (bei einer Zwischentaktfrequenz von 32,768 MHz), die höchstens gleich der maximal zugelassenen Taktversetzung (im Beispiel 35 ns) zwischen den von den beiden Amtstakterzeugern CCG′ und CCG″ gelieferten Amtstakten T′ und T″ ist. Dies geschieht in der Schaltungsanordnung nach Fig. 1 jeweils in einem einen Phasendiskriminator PD, einen Tiefpaß, einen in der Frequenz steuerbaren Oszillator VCO und einen Frequenzuntersetzer Z umfassenden PLL-Zwischentaktgenerator. Solche PLL-Taktgeneratoren sind grundsätzlich (z. B. aus »Principles of Colour Television«, John Wiley & Sons Inc., New York 1956, S. 180; ELEKTRONIK (1973) 8, 285–287) bekannt, weshalb sich hier weitere Erläuterungen dazu erübrigen.

Dem vom Mastertakt M″ servosynchronisierten Zwischentaktgenerator C-PD-VCO des geführten Amtstakterzeugers CCG″ ist eine digitale Taktuntersetzungs- und Phasensynchronisierungsschaltung UVR″ nachgeschaltet, die mit einem Vergleichseingang an den Ausgang T′ des führenden Amtstakterzeugers CCG′ angeschlossen ist und an deren Ausgang T″ der Amtstakt des geführten Amtstakterzeugers CCG″ auftritt. In dieser digitalen Taktuntersetzungs- und Phasensynchronisierungsschaltung UVR″ wird der Amtstakt T″ des geführten Amtstakterzeugers CCG″ mit dem Amtstakt T′ des führenden Amtstakterzeugers CCG′ verglichen, wobei bei Feststellung einer einen Grenzwert in der Größenordnung einer Zwischentaktperiode überschreitenden Taktversetzung zwischen den beiden Amtstakten eine Halbperiode des geführten Amtstaktes T″ um die Länge einer Zwischentaktperiode bei nacheilendem geführtem Amtstakt T″ verkürzt und bei voreilendem geführtem Amtstakt T″ verlängert wird, wie dies nachfolgend anhand des Ausführungsbeispiels noch näher erläutert wird.

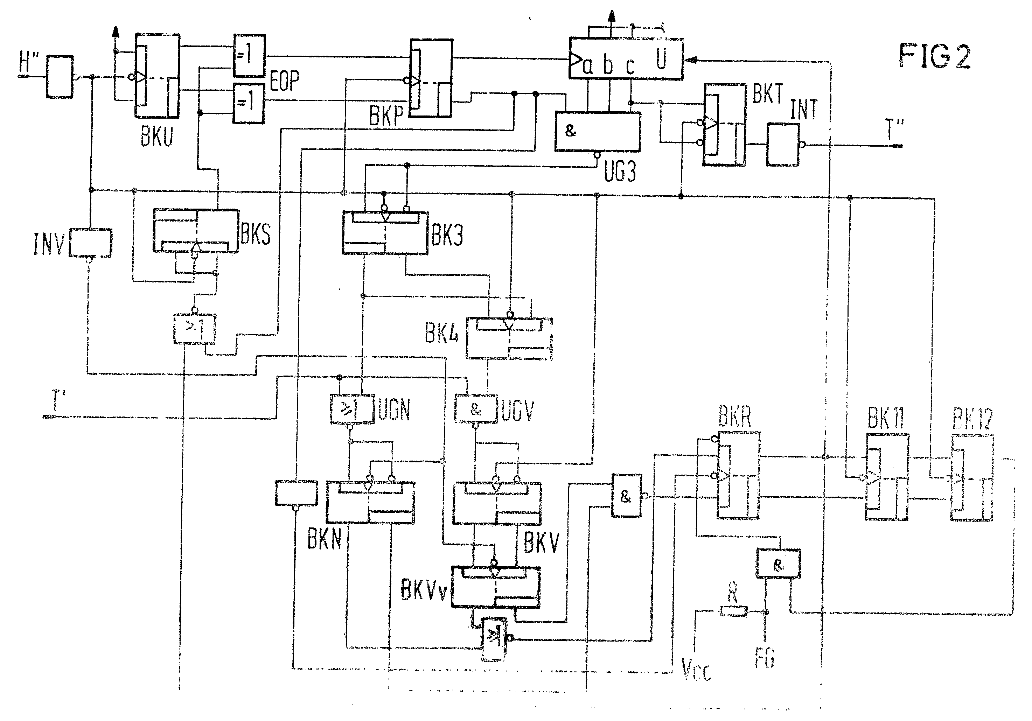

Ein Beispiel dafür, wie die digitale Taktuntersetzungs- und Phasensynchronisierungsschaltung UVR zweckmäßig ausgebildet sein kann, ist in der Zeichnung Fig. 2 dargestellt; die Wirkungsweise der Schaltungsanordnung nach Fig. 2 wird durch die in den Zeichnungen Fig. 3 und 4 dargestellten Schaltzustandsdiagramme verdeutlicht. In der Schaltungsanordnung nach Fig. 2 führt der mit dem die Zwischentaktfrequenz von beispielsweise 32,768 MHz aufweisenden Zwischentakt, wie er in Fig. 3 und 4 in Zeile H″ dargestellt ist, beaufschlagte Zwischentakteingang H″ zunächst zu einer Zwischentakt-Frequenzhalbierungsstufe in Form eines bistabilen Kippgliedes BKU, dessen Schaltzustände in Fig. 3 und 4 jeweils in der Zeile $Q_{BKU}$ verdeutlicht sind. Über einen durch zwei EXCLUSIV-ODER-Glieder EOP, denen ein bistabiles Kippglied BKP nachgeschaltet ist, gebildeten Phasenumtaster ist der Zwischentakt-Frequenzhalbierungsstufe BKU ein weiterer Frequenzuntersetzer U nachgeschaltet, der durch einen Binärzähler gebildet sein kann und mit dessen der Amtstaktfrequenz von im Beispiel 2,048 MHz entsprechendem Ausgang c über ein bistabiles Kippglied BKT der Amtstaktausgang T″ des Amtstakterzeugers verbunden ist. Eingangssignale und Schaltzustände des bistabilen Schaltgliedes BKP sind in Fig. 3 und 4 jeweils in den Zeilen $J_{BKP}$ und $Q_{BKP}$ angedeutet, Schaltzustände des Frequenzuntersetzers U in den Zeilen a, b, c. Jeweils in Zeile T″ ist in Fig. 3 und 4 der am Amtstaktausgang T″ der Schaltungsanordnung nach Fig. 2 auftretende Amtstakt dargestellt.

An den Frequenzuntersetzer U ist eine Phasenvergleichsschaltung für den Phasenvergleich zwischen dem geführten Amtstakt T″ und dem über eine Leitung T′ zugeführten führenden Amtstakt, wie er in Fig. 3 und 4 jeweils in Zeile T′ dargestellt ist, angeschlossen. Diese Vergleichsschaltung weist zunächst zwei Zeitfensterschaltungen auf, die durch ein NAND-Glied UG3 und ein bistabiles Kippglied

**0 014 945**

BK3 sowie ein bistabiles Kippglied BK4 gebildet werden; Schaltzustände der beiden bistabilen Kippglieder sind in Fig. 3 und 4 in den Zeilen $Q_{BK3}$ und $Q_{BK4}$ dargestellt. Die beiden bistabilen Kippglieder BK3 und BK4 führen zu den jeweils einen Eingängen zweier Verknüpfungsglieder, nämlich des NOR-Gliedes UGN und UND-Gliedes UGV, die an ihrem jeweils zweiten Eingang mit dem Amtstakt T' des jeweils führenden Amtstakterzeugers beaufschlagt sind. Den beiden Verknüpfungsgliedern UGN und UGV sind bistabile Kippglieder BKN bzw. BKV, BKVv nachgeschaltet, deren Schaltzustände in Fig. 3 und 4 jeweils in den Zeilen $Q_{BKN}$, $Q_{BKV}$, $Q_{BKVv}$ dargestellt sind und die über eine ODER-Schaltung zusammengefaßt zu einem bistabilen Kippglied BKR führen. An dieses bistabile Kippglied BKR ist zum einen mit einem besonderen Schalteingang der Frequenzuntersetzer U angeschlossen und zum anderen ein durch ein bistabiles Kippglied BKS gegebenes Stellglied für den Phasenumtaster EOP. Die Schaltzustände der beiden zuletzt genannten bistabilen Kippglieder sind in Fig. 3 und 4 in den Zeilen $Q_{BKR}$ und $Q_{BKS}$ dargestellt.

Mit Hilfe der Verknüpfungsglieder UGN und UGV und der jeweils nachfolgenden binären Kippglieder BKN bzw. BKV und BKVv wird festgestellt, ob die Taktversetzung zwischen führendem Amtstakt T' und geführtem Amtstakt T'' einen vorgegebenen Grenzwert überschreitet:

Eilt der geführte Amtstakt T'' gegenüber dem führenden Amtstakt T' soweit nach, daß im Zeitpunkt $t_n$ (in Fig. 3) — d. h. im Zeitpunkt der in dem vom bistabilen Kippglied BK3 bestimmten Zeitfenster (siehe Zeile $Q_{BK3}$ in Fig. 3) auftretenden, unmittelbar vor der negativen Taktflanke des geführten Amtstaktes T'' liegenden negativen Taktflanke des Zwischentaktes H'' — auf der den Amtstakt T' führenden Leitung bereits ein »O«-Signal auftritt, so wird über das NOR-Glied UGN das bistabile Kippglied BKN aktiviert. Unter Berücksichtigung der Arbeitszeiten von Verknüpfungsgliedern, Invertern und bistabilen Kippgliedern ist dies der Fall bei einer Taktversetzung zwischen führendem Amtstakt T' und geführtem Amtstakt T'', die größer als

$$\Delta\varphi_{Nmax} = \Delta t_{1max} + \Delta t_{2max} + h/2$$

ist, wobei sich die Bedeutung der einzelnen Summanden unmittelbar aus Fig. 3 ergibt. In der Schaltungsanordnung nach Fig. 2 ist

$$\Delta\varphi_{Nmax} = (t_{UGNmax} + t_{BKNmax} - t_{INVmin}) + (t_{BKTmax} + t_{INTmax}) + h/2,$$

worin die bei den einzelnen Arbeitszeiten angegebenen Indizes auf den entsprechenden Schaltungsbaustein hinweisen; in der Praxis kann etwa

$$\Delta\varphi_{Nmax} = (5,5 + 3 - 1,2) + (7 + 1,3) + 15,26 = 30,8 \text{ ns}$$

sein.

Eilt umgekehrt der geführte Amtstakt T'' gegenüber dem führenden Amtstakt T' soweit vor, daß im Zeitpunkt $t_v$ (in Fig. 4) — d. h. im Zeitpunkt der am Ende des vom bistabilen Kippglied BK4 bestimmten Zeitfensters (siehe Zeile $Q_{BK4}$ in Fig. 4) auftretenden, unmittelbar hinter der negativen Taktflanke des geführten Amtstaktes T'' liegenden positiven Taktflanke des Zwischentaktes H'' — auf der den Amtstakt T' führenden Leitung noch ein »1«-Signal auftritt, so wird über das UND-Glied UGV das bistabile Kippglied BKV und eine halbe Zwischentaktperiode später das bistabile Kippglied BKVv aktiviert. Unter Berücksichtigung der Arbeitszeiten von Verknüpfungsgliedern, Invertern und bistabilen Kippgliedern ist dies der Fall bei einer Taktversetzung zwischen geführtem Amtstakt T'' und führendem Amtstakt T', die größer als

$$\Delta\varphi_{Vmax} = h - \Delta t_{2min} - \Delta t_{1min}$$

ist, wobei sich die Bedeutung der einzelnen Glieder unmittelbar aus Fig. 4 ergibt. In der Schaltungsanordnung nach Fig. 2 ist

$$\Delta\varphi_{Vmax} = h - (t_{BKTmin} + t_{INTmin}) - t_{UGVmin},$$

worin wiederum die Indizes auf die entsprechenden Schaltungsbausteine hinweisen; in der Praxis kann etwa

$$\Delta\varphi_{Vmax} = 30,52 - (1,6 + 1,2) - 1,8 = 25,9 \text{ ns}$$

sein.

Die Grenzwerte $\Delta\varphi_{Nmax}$ und $\Delta\varphi_{Vmax}$ liegen somit beide in der Größenordnung einer Zwischentaktperiode h von im Beispiel 30,52 ns und jedenfalls unterhalb der zwischen führendem Amtstakt T' und geführtem Amtstakt T' maximal zugelassenen Taktversetzung von im Beispiel 35 ns.

Sowohl die Aktivierung des bistabilen Kippgliedes BKN als auch die Aktivierung des bistabilen Kippgliedes BKV bzw. BKVv hat eine Aktivierung des nachfolgenden bistabilen Kippgliedes BKR zur

5

Folge, wobei das bistabile Kippglied BKR über die bistabilen Kippglieder BK11 und BK12 nach zwei Zwischentaktperioden wieder zurückgesetzt wird; zugleich wird auch ein Umschalten des bistabilen Kippgliedes BKS bewirkt. Letzteres hat zur Folge, daß dem Frequenzumsetzer U über den Phasenumtaster EOP nunmehr ein zum bisherigen Takt inverser Takt zugeführt wird, was sich unmittelbar in einer Verlängerung der gerade auftretenden Halbperiode des geführten Amtstaktes T″ um die Dauer h einer Periode des Zwischentaktes H″ auswirkt, wie dies bei voreilendem geführtem Amtstakt T″ vorgesehen und hierfür in Fig. 4 in Zeile T″ angedeutet ist.

Die Aktivierung des bistabilen Kippgliedes BKR hat in der Schaltungsanordnung nach Fig. 2 außerdem zur Folge, daß der durch einen Binärzähler realisierbare Frequenzuntersetzer U im Zeitpunkt $t_z$, d. h. zu der während der Aktivierung des bistabilen Kippgliedes BKR auftretenden positiven Taktflanke des Zwischentaktes H″, in den dem Zählzustand 2 entsprechenden Untersetzungszustand gesetzt wird. In diesen Untersetzungszustand gelangt der Frequenzuntersetzer U in diesem Augenblick bei voreilendem geführtem Amtstakt T″ (Fig. 4) ohnehin, so daß der Setzvorgang keine weiteren Auswirkungen hat. Bei nacheilendem geführtem Amtstakt T″ (Fig. 3) würde der Frequenzuntersetzer im Zeitpunkt $t_z$ (in Fig. 3) an sich in einen dem Zählzstand 1 entsprechenden Untersetzungszustand gelangen; tatsächlich wird der Frequenzuntersetzer U jetzt aber in den dem Zählzustand 2 entsprechenden Untersetzungszustand gesetzt. Damit wird der Untersetzer U im Ergebnis um einen zusätzlichen Untersetzungsschritt weitergeschaltet, was sich in Verbindung mit der bereits erwähnten Auswirkung der Phasenumtastung in einer Verkürzung der gerade auftretenden Halbperiode des geführten Amtstaktes T″ um die Dauer h einer Periode des Zwischentaktes H″ auswirkt, wie sie bei nacheilendem geführtem Amtstakt T″ vorgesehen und hierfür in Fig. 3 in Zeile T″ angedeutet ist.

In jedem Falle folgt somit der geführte Amtstakt T″ dem führenden Amtstakt T′ in der Phasenlage. Dabei ist die Phasensynchronisierung aber mit einer gewissen Hysterese behaftet, so daß Jittererscheinungen des führenden Amtstaktes T′, wie sie in der Praxis mit Zeitamplituden etwa in der Größenordnung von 5 ns auftreten können, unbeachtlich bleiben. Der Hysteresebereich ergibt sich aus Fig. 3 und 4 mit

$$\delta = \Delta\varphi_{Nmin} + \Delta\varphi_{Vmin} - h = t_{UGNmin} + t_{BKNmin} - t_{INVmax} - t_{UGVmax} + h/2;$$

in der Praxis kann etwa

$$\delta = 1,6 + 3 - 1,2 - 7,5 + 15,26 = 11,2 \text{ ns}$$

sein.

Die Schaltungsanordnung nach Fig. 2 weist noch einen Umschaltsignaleingang FG auf, der zu einem Sperreingang des bistabilen Kippgliedes BKR führt. Über diesen Umschaltsignaleingang kann durch ein synchron zum Amtstakt auftretendes Umschaltsignal »0« der bisher geführte Amtstakterzeuger umgeschaltet werden, so daß er nicht mehr nach Maßgabe des auf der Leitung T′ auftretenden Amtstakts geführt wird; bezogen auf die Schaltungsanordnung nach Fig. 1 vermag der bisher geführte Amtstakterzeuger (CCG″ in Fig. 1) ggf. nunmehr seinerseits den in umgekehrtem Sinne umgeschalteten, bisher führenden Amtstakterzeuger (CCG′ in Fig. 1) zu führen, wie dies in Fig. 1 durch eine gestrichelt gezeichnete Verbindung angedeutet ist.

Abschließend sei noch bemerkt, daß durch entsprechende Ausgestaltung des Frequenzuntersetzers U von diesem auch noch weitere Takte abgenommen werden können, so beispielsweise über den Ausgang a ein Takt mit einer Taktfrequenz von beispielsweise 8,192 MHz oder, unter entsprechender Erweiterung des Frequenzuntersetzers U, an zusätzlichen Ausgängen Takte mit Taktfrequenzen von beispielsweise 2 kHz und 250 Hz. Bei allen solchen Takten bleibt die Taktversetzung zwischen jeweils führendem und jeweils geführtem Takt innerhalb der gewünschten Grenze von im Beispiel 35 ns.

**Patentansprüche**

1. Schaltungsanordnung zur Takterzeugung in Fernmeldeanlagen, insbesondere Zeitmultiplex-Digital-Vermittlungsanlagen, mit einer die Fernmeldeanlage und die von ihr ausgehenden Leitungen mit einem vorzugsweise im Servosynchronverfahren in der Taktfrequenz bestimmten Amtstakt (T′, T″) versorgenden, doppelt vorgesehenen Amtstakterzeugungsanordnung (CCG′, CCG″), wobei der jeweils eine der beiden Amtstakterzeuger (CCG′) einen von ihm unabhängig von dem jeweils anderen Amtstakterzeuger (CCG″) erzeugten Amtstakt (T′) liefert und der jeweils andere (geführte) Amtstakterzeuger (CCG″) einen mit dem von dem jeweils einen (führenden) Amtstakterzeuger (CCG′) gelieferten Amtstakt (T′) zumindest angenähert phasengleich synchronisierten Amtstakt (T″) liefert, dadurch gekennzeichnet,
daß jeder der beiden Amtstakterzeuger (CCG′, CCG″) durch einen ihm zugeführten Mastertakt (M′, M″) servosynchronisiert einen Zwischentakt (H′, H″) mit einer Taktperiode (h) erzeugt, die höchstens gleich der maximal zugelassenen Taktversetzung zwischen den von den beiden Amtstakterzeugern (CCG', CCG'') gelieferten Amtstakten (T', T'') ist, daß dieser Zwischentakt (H', H'') einem Frequenzuntersetzer (BKU, U) zur Gewinnung des Amtstaktes (T', T'') zugeführt wird, und daß der Amtstakt (T'') des jeweils geführten Amtstakterzeugers (CCG'') mit dem Amtstakt (T') des jeweils führenden Amtstakterzeugers (CCG') verglichen wird und bei Feststellung einer einen Grenzwert in der Größenordnung einer Zwischentaktperiode (h) überschreitenden Taktversetzung eine Halbperiode des geführten Amtstaktes (T'') um die Länge einer Zwischentaktperiode (h) bei nacheilendem geführtem Amtstakt (T'') verkürzt und bei voreilendem geführtem Amtstakt (T'') verlängert wird.

2. Schaltungsanordnung nach Anspruch 1, dadurch gekennzeichnet, daß den beiden Amtstakterzeugern (CCG', CCG'') die Mastertakte (M', M'') jeweils von einer von einem Normaltakt (N) beaufschlagten, die jeweilige Regelgröße zugleich speichernden Frequenznachsteuereinrichtung (FN', FN'') her zugeführt werden.

3. Schaltungsanordnung nach den Ansprüchen 1 oder 2, dadurch gekennzeichnet, daß dem vom Mastertakt (M'') servosynchronisierten Zwischentaktgenerator (Z-PD-VCO) des jeweils geführten Amtstakterzeugers (CCG'') eine digitale Taktuntersetzungs- und Phasensynchronisierungsschaltung (UVR'') nachgeschaltet ist, die mit einem Vergleichseingang an den Ausgang (T') des jeweils führenden Amtstakterzeugers (CCG') angeschlossen ist und an deren Ausgang (T'') der Amtstakt des geführten Amtstakterzeugers (CCG'') auftritt.

4. Schaltungsanordnung nach einem der Ansprüche 1 bis 3, dadurch gekennzeichnet, daß die digitale Taktuntersetzungs- und Phasensynchronisierungsschaltung (UVR'') eine Zwischentakt-Frequenzhalbierungsstufe (BKU aufweist, der über einen bei jeder Feststellung einer den jeweiligen Grenzwert überschreitenden Taktversetzung betätigten Phasenumtaster (EOP, BKP) ein dabei um einen zusätzlichen Untersetzungsschritt lediglich bei nacheilendem geführtem Amtstakt (T'') weitergeschalteter weiterer Frequenzuntersetzer (U) nachgeschaltet ist, mit dessen der Amtstaktfrequenz entsprechenden Ausgang (c) der Amtstaktausgang (T'') des Amtstakterzeugers (CCG'') verbunden ist.

5. Schaltungsanordnung nach den Ansprüchen 3 und 4, dadurch gekennzeichnet, daß mit dem Frequenzuntersetzer (U) über zwei Amtstakt-Zeitfensterschaltungen (UG3, BK3; BK4) zwei an ihrem jeweils zweiten Eingang mit dem Amtstakt (T') des jeweils führenden Amtstakterzeugers (CCG') beaufschlagte Verknüpfungsglieder (UGN, UGV) verbunden sind, die über ihnen nachgeschaltete bistabile Kippglieder (BKN; BKV, BKVv) und eine ODER-Schaltung zu einem den Frequenzuntersetzer (U) steuernden Einstellglied (BKR) führen, an dessen Ausgang außerdem ein Stellglied (BKS) für den Phasenumtaster (EOP, BKP) angeschlossen ist.

6. Schaltungsanordnung nach Anspruch 5, dadurch gekennzeichnet, daß das Einstellglied (BKR) einen Sperreingang für ein Umschaltsignal (FG) zum Umschalten eines bisher geführten Amtstakterzeugers (CCG'') in einen führenden Amtstakterzeuger aufweist.


## Claims

1. Cicuit arrangement for the clock pulse generation in telecommunications systems, in particular t.d.m. digital exchange systems, comprising an exchange clock pulse generation system (CCG', CCG'') which is provided twice and which provides the telecommunications system and the lines emanating therefrom with an exchange clock pulse (T', T'') which is preferably determined in the clock pulse frequency in the servo-synchronous process, where in each case the one of the two exchange clock pulse generators (CCG') supplies an exchange clock pulse (T') which is produced by the latter independently of the respective other exchange clock pulse generator (CCG'') and the respective other (controlled) exchange clock pulse generator (CCG'') supplies an exchange clock pulse (T'') which is synchronised so as to be at least approximately in phase with the respective exchange clock pulse (T') which is supplied by the one (controlling) exchange clock pulse generator (CCG'), characterised in that each of the two exchange clock pulse generators (CCG', CCG'') produces an intermediate clock pulse (H', H''), with a clock pulse period (h), in a servo-synchronised manner by means of a master clock pulse (M, M'') supplied to the exchange clock pulse generator, which clock pulse period at most equals the maximum permissible clock pulse offset between the exchange clock pulses (T, T'') supplied by the two exchange clock pulse generators (CCG', CCG''), that this intermediate clock pulse (H', H'') is fed to a frequency-step-down device (BKU, U) in order to obtain the exchange clock pulse (T', T''), and that the exchange clock pulse (T'') of the respective controlled exchange clock pulse generator (CCG'') is compared with the exchange clock pulse (T') of the respective controlling exchange clock pulse generator (CCG') and on ascertainment of a clock pulse offset exceeding a limit value in the order of an intermediate clock pulse period (h), a half-period of the controlled exchange clock pulse (T'') is shortened by the lenght of an intermediate clock pulse period (h) in the case of a lagging controlled exchange clock pulse (T'') and lengthened in the case of a leading controlled exchange clock pulse (T'').

2. Circuit arrangement as claimed in claim 1, characterised in that the master clock pulses (M', M'') are supplied to the two exchange clock pulse generators (CCG', CCG'') in each case from a frequency adjustment device (FN', FN'') which is acted upon by a standard clock pulse (N) and simultaneously stores the relevant control variable.

3. Circuit arrangement a sclaimed in claims 1 or 2, characterised in that a digital clock pulse step-down and phase synchronisation circuit (UVR'') is connected following the intermediate clock pulse generator (Z-PD-VCO), servo-synchronised by the master clock pulse (M''), of the respective controlled exchange clock pulse generator (CCG''), which circuit is connected to the output (T') of the respective controlling exchange clock pulse generator (CCG') by means of a comparison input and at the output (T'') of which circuit, there occurs the exchange clock pulse of the controlled exchange clock pulse generator (CCG'').

4. Circuit arrangement as claimed in one of claims 1 to 3, characterised in that the digital clock pulse step-down and phase synchronisation circuit (UVR'') possesses an intermediate clock pulse frequency dividing stage (BKU) which via a phase keying device (EOP, BKP) which is actuated in the case of every ascertainment of a clock pulse offset exceeding the relevant limit value, is followed by a further frequency step-down device (U) which is advanced by an additional step-down step only in the case of a lagging controlled exchange clock pulse (T'') and to whose output (c) which corresponds to the exchange clock pulse frequency, is coupled the exchange clock pulse output (T'') of the exchange clock pulse generator (CCG'').

5. Circuit arrangement as claimed in claims 3 and 4, characterised in that by means of two exchange clock pulse time window circuits (UG3, BK3; BK4), two coupling elements (UGN, UGV), which are supplied at their respective second input with the exchange clock pulse (T') of the respective controlling exchange clock pulse generator (CCG'), are connected to the frequency stepdown device (U), which elements lead via following bistable flip-flops (BKN; BKV, BKVv) and an OR-circuit to an adjusting element (BKR) which controls the frequency step-down device (U) and to whose output a setting element (BKS) for the phase keying device (EOP, B, BKP) is connected.

6. Circuit arrangement as claimed in claim 5, characterised in that the adjusting element (BKR) has a blocking input for a change-over signal (FG) in order to change over a previously controlled exchange clock pulse generator (CCG'') into a controlling exchange clock pulse generator.

**Revendications**

1. Montage pour produire une cadence dans des installations de télécommunications, notamment des centraux à multiplexage temporel de signaux numériques, comportant un dispositif (CCG', CCG'') de production de cadence de service, prévu en double, et alimentant l'installation de télécommunications et les lignes, partant de cette dernière, avec une cadence de service (T', T'') dont la fréquence est déterminée de préférence selon le procédé servo-synchrone, l'un des deux générateurs de cadence de service (CCG') délivrant une cadence de service (T') produite par lui, indépendamment de l'autre générateur de cadence de service (CCG''), et l'autre générateur de cadence de service (piloté) (CCG'') délivrant une cadence de service (T'') synchronisée au moins approximativement en phase par la cadence de service (T') délivrée par ledit générateur de cadence de service (piloté) (CCG''), caractérisé en ce que chacun des deux générateurs de cadence de service (CCG', CCG'') produit, en étant servo-synchronisé par une cadence-maitre (M', M'') qui lui est envoyée, une cadence intermédiaire (H', H'') possédant une période (h) qui est tout au plus égale au décalage maximum admissible entre les cadences de service (T', T'') délivrées par les deux générateurs de cadence de service (CCG', CCG''), que cette cadence intermédiaire (H', H'') est envoyée à un diviseur de fréquence (BKU, U) pour l'obtention de la cadence de service (T', T''), et que la cadence de service (T'') du générateur de cadence de service respectivement piloté (CCG'') est comparée à la cadence de service (T') du générateur de cadence de service respectivement pilote (CCG'), et que, lors de la détermination d'un décalage des cadences dépassant une valeur-limite de l'ordre de grandeur d'une période (h) de la cadence intermédiaire, une demi-période de la cadence de service pilotée (T'') est réduite de la longueur d'une période (h) de la cadence intermédiaire lorsque la cadence de service pilotée (T'') est en retard et est prolongée de la longueur d'une période (h) de la cadence intermédiaire lorsque la cadence de service pilotée (T'') est en avance.

2. Montage selon la revendication 1, caractérisé en ce que les cadences-maitres (M', M'') sont envoyées aux deux générateurs de cadence de service (CCG', CCG'') respectivement à partir d'un dispositif de commande par la fréquence (FN', FN'') chargée par une cadence-étalon (N) et mémorisant simultanément la grandeur de réglage respective.

3. Montage selon les revendications 1 ou 2, caractérisé en ce qu'en série et en aval du générateur de la cadence intermédiaire (Z-PD-VCO), servosynchronisée par la cadence-maitre (M''), du générateur respectivement piloté de cadence de service (CCG''), est branché un circuit numérique (UVR'') de division de cadence et de synchronisation de phase, qui est raccordé, par une entrée de comparaison, à la sortie (T') du générateur de cadence de service pilote (CCG') et à la sortie (T'') duquel apparait la cadence de service du générateur de cadence de service piloté (CCG'').

4. Montage selon l'une des revendications 1 à 3, caractérisé en ce que le circuit numérique (UVR'') de division de cadence et de synchronisation de phase comporte un étage (BKU) de division par deux de

**0 014 945**

la fréquence de la cadence intermédiaire, en série et en aval duquel se trouve branché par l'intermédiaire d'un manipulateur de phase (EOP, BKP) actionné lors de chaque détermination d'un décalage des cadences dépassant la valeur-limite respective, un autre diviseur de fréquence (U) avancé d'un pas supplémentaire de division uniquement lorsque la cadence de service pilotée (T'') est en avance et à la sortie (c), correspondant à la fréquence de la cadence de service, duquel est reliée la sortie de la cadence de service (T'') du générateur de cadence de service (CCG'').

5. Montage selon les revendications 3 et 4, caractérisé en ce qu'au diviseur de fréquence (U) sont reliés, par l'untermédiaire de deux circuits délivrant des créneaux temporels de la cadence de service (UG3, BK3; BK4), deux circuits logiques (UGN, UGV) chargés sur leur seconde entrée respective par la cadence de service (T') du générateur de cadence de service pilote CCG') et qui sont reliés par l'intermédiaire de circuits à bascule bistabile (BKN, BKV, BKVv), branchés en série et en aval dudit circuit logique, et d'un circuit OU, à un circuit de réglage (BKR) commandant le diviseur de fréquence (U), et à la sortie duquel est raccordé en outre un organe de réglage (BKS) pour le manipulateur de phase (EOP, BKP).

6. Montage selon la revendication 5, caractérisé en ce que l'organe de réglage (BKR) comporte une entrée de blocage pour un signal de commutation (FG) pour faire passer un générateur de cadence de service, jusqu'alors piloté (CCG''), à l'état d'un générateur de cadence de service pilote.

9

# FIG1

FIG 2

FIG 3

FIG4

$H''$
$Q_{BKU}$
$J_{BKP}$
$Q_{BKP}$
$a$
$b$
$c$
$Q_{BK3}$
$T'$
$Q_{RKN}$
$Q_{BK4}$
$Q_{BKV}$
$Q_{BKVv}$
$Q_{BKR}$
$Q_{BKS}$
$T''$
$T'$

$t_n$  $t_v$  $t_z$

$\Delta t_2$  $\Delta t_1$  $\Delta \varphi$